# EUROPÄISCHE PATENTSCHRIFT

(11) **EP 2 891 754 B1**
(45) Veröffentlichungstag und Bekanntmachung des Hinweises auf die Patenterteilung: **14.06.2017**
(21) Anmeldenummer: 14196773.7
(22) Anmeldetag: 08.12.2014
(51) Int. Cl.: E04F 11/18, F24F 12/00, F24J 2/04, F24F 5/00

(54) **GELÄNDER ZUR RAUMBELÜFTUNG UND HEIZUNGSUNTERSTÜTZUNG**
RAILING FOR VENTILATING ROOMS AND ASSISTING HEATING
GARDE-CORPS DESTINÉ À L'AÉRATION D'UN LOCAL ET À L'APPOINT EN CHAUFFAGE

(30) Priorität: 08.12.2013 DE 102013020147
(43) Veröffentlichungstag der Anmeldung: 08.07.2015
(73) Patentinhaber: EnerSearch GmbH, 71336 Waiblingen (DE)
(72) Erfinder:
(74) Vertreter: Clarenbach, Carl-Philipp

(56) Entgegenhaltungen:
- EP-A1- 1 953 476
- WO-A1-2011/062541
- DE-A1- 4 322 653
- FR-A1- 2 462 671
- JP-A- 2002 106 974
- JP-A- 2011 069 103
- US-A- 4 312 328

## Beschreibung

### Einleitung, Stand der Technik

Die Erfindung betrifft ein Geländer entsprechend dem Oberbegriff des Anspruchs 1. Ein Geländer entsprechend dem Oberbegriff des Anspruchs 1 ist in FR 2 462 671 A1 offenbart.

Heute energetisch sanierte Gebäude und Neubauten sind dadurch gekennzeichnet, dass die Gebäude dicht sind oder der Mauerkörper abgedichtet wird und oder dichte Fenster eingebaut werden. Um die Feuchtigkeit aus dem Gebäude zu bekommen, werden dezentrale oder zentrale Lüftungsanlagen eingebaut. Um weitere Energie zu sparen werden vorzugsweise Lüftungsanlagen mit Wärmerückgewinnung eingebaut.

Bei dezentralen Lüftungen mit Wärmerückgewinnung werden die
Wärmerückgewinnungseinheiten vorzugsweise in einem Wanddurchbruch je Zimmer installiert. Da hierbei eine Vielzahl von Wanddurchbrüchen in den aufwändig abgedichteten und gedämmten Baukörper gemacht werden müssen, sind damit Nachteile wie Lüftergeräusche, Außengeräusche, Kälte- und Wärmebrücken verbunden.

Eine andere Möglichkeit, ein Gebäude zu belüften und dennoch Energie zu sparen, ist der Einsatz von solaren Luftkollektoren. Hier wird kalte trockene Außenluft durch Absorberplatten solar erwärmt und zur Entfeuchtung ins Gebäude eingebracht. Um den Heizertrag dieser Absorberplatten zu erhöhen, müssen sie großflächig installiert werden, weil nur somit eine höhere Wärmeübetragung in der kalten Jahreszeit auch bei nur diffusem Licht möglich ist. Der Einbau dieser großflächigen Absorberplatten ist aber nur begrenzt möglich, da die notwendige Fläche der solar nutzbaren Gebäudeseiten oft durch Fenster und Balkongeländer belegt ist. Selbst wenn genug Fassadenfläche zur Verfügung stünde, stellt die Anbringung an der Fassade oft ein optisches Problem dar, weil diese Solarkollektoren nicht zufriedenstellend in die Fassade integrierbar sind. Daher wird der Luftkollektor oft von Architekten und Bauherren abgelehnt.

Um dieses Problem zu entgehen, wäre es heute möglich, einen solaren Luftkollektor an einem bereits existierenden Balkongeländer anzubringen. Allerdings stellen sich einige Probleme.

Die Luftübertragung ins Gebäude ist nicht gelöst, weil der Rahmen eines Standardluftkollektors nicht durchströmt wird und die heutigen Balkongeländer keine Luftströme durchlassen. Die Optik leidet, da heutige Luftkollektoren mindestens 100 mm dick sind, und diese lassen sich dadurch unschön auf dem Balkon integrieren und entsprechen somit nicht den ästhetischen Anforderungen der Architekten und Bauherren. Außerdem kann die Anbringung eines Luftkollektors an einem bereits existierenden Balkongeländer die Statik des Balkons gefährden, in dem die ganze Konstruktion zu schwer wird.

Heutige Geländer werden oft mit semi-transluzentem Glas verbaut, damit ein hochwertiger Außeneindruck entsteht und damit die Personen und Gegenstände hinter dem Geländer von der Geländeraußenseite nicht sichtbar sind.

Die heutigen Geländer, die als Balkonbrüstungen mit einem semi-transluzentem Glas verbaut werden, welche den ästhetischen Anforderungen von Architekten und Bauherren entsprechen, sind nicht für eine Luftführung ausgelegt. Selbst wenn Strangpressprofile als Rahmen für die Balkonbrüstungselemente eingesetzt werden, werden diese nicht für eine Luftführung verwendet, sondern werden nur hohl produziert, damit sie nicht zu schwer werden und um Materialkosten zu sparen.

Aus der Offenlegungsschrift FR 2 462 671 A1 ist bereits ein Geländer aus zwei oder mehreren Platten bekannt, das an einem Gehäuse angebracht werden soll, wobei die Platten beabstandet zueinander angeordnet sind, sodass zwischen ihnen ein Hohlraum gebildet wird, durch welchen eine Luftströmung fließen und in welchem eine oder mehrere Absorberplatten angeordnet werden können.

### Aufgabe, Lösung und Vorteile der Erfindung

Aufgabe der vorliegenden Erfindung ist es deshalb, ein einfaches Geländer zu schaffen, dass gleichzeitig den ästhetischen Anforderungen von Architekten und Bauherren entspricht und dennoch über eine derart entwickelte Luftführungstechnik verfügt, damit frische, warme Luft geräuscharm in ein Gebäude eingeführt werden kann, um die Wohnung zu entfeuchten aber auch um gleichzeitig Heizkosten zu sparen.

Diese Aufgabe wird durch ein Geländer mit den Merkmalen der Ansprüche 1 bis 9 gelöst.
- Die vorliegende Erfindung kann als gesamtes Balkongeländer angebracht werden, um die Kombination von einem Balkongeländer und Luftkollektor zu ersetzen um somit das Gewicht zu reduzieren, damit die Statik des Balkons nicht gefährdet wird.
- Die Strangpressprofile die in der vorliegenden Erfindung verwendet werden, sind derart angebracht, dass diese über die horizontale Balkonseite luftdurchströmt werden können und dennoch die statische Eigenschaften zum Halten des semi-transluzenten Glases nach Außen, die Absorberplatten, die Halteplatte nach hinten und den Einbau der Lüftertechnik stand halten, damit frische, warme Luft ins Gebäudeinnere gelangt. Das Geländer kann mit einem Luftvolumen von über 100m³ pro Stunde durchströmt werden, das den Anforderungen der heutigen Lüftungsnormen entspricht.
- Die genannten Strangpressprofile können symmetrisch gleich extrudiert aus Aluminium, Kunststoffen oder anderen Materialien gefertigt werden, um Produktionskosten zu senken.
- Das gesamte Geländer inklusive eines Handlaufes hat die gleiche Stärke, die auch zur Halterung eines einfachen Geländerglases notwendig wäre, das heißt < 60 mm, und hat eine semi-transluzente Optik um die ästhetischen Anforderungen des heutigen Bauweise von Geländern zu entsprechen.
- Um die Revisionsfähigkeit und die Reinigung des luftdurchströmten Geländers zu erreichen ist eine öffnungsfähige Leiste zur Balkonaußenseite angebracht, die das Glas und die dahinterliegenden Absorberplatten an der Sonnenlicht zugänglichen Außenseite des Balkongeländers öffnen lässt. In einer weiteren Ausführung ist eine öffnungsfähige Leiste zur Balkoninnenseite angebracht, die das Glas und die dahinterliegenden Absorberplatten von der dem Gebäude zugewandten Innenseite des Balkongeländers öffnen lässt.
- Um das gesamte Geländer nach innen einfach an einem Balkonpfosten zu montieren, ist eine Halteplatte auf die Strangpressprofile von der Glasplatte und den Absorberplatten thermisch entkoppelt angebracht. Diese Halteplatte hat neben der statischen Eigenschaft und der einfachen Montage, die Aufgabe, die starke Hitzeentwicklungen bei starker solarer Strahlung stark verzögert an die Innenseite des Balkons weiterzuleiten. Dies ist wichtig, sodass sich Personen auf dem Balkon nicht an der Geländerinnenseite verbrennen können. Selbst bei einer winterlichen solaren Strahlung in Zentraleuropa können erzeugte Temperaturen von über 90 Grad Cel. an der nach außengewandten Glasseite des Geländers auftreten.
- Die vorzugsweise horizontale Luftführung im Geländer ermöglicht es, den Druckverlust zu reduzieren und eine ideale Wärmeübertragung von den Absorberplatten auf die vorbeiströmende Luft zu gewährleisten, da das gesamte Geländer gleichmäßig luftdurchströmt werden kann.
- Die Lüftertechnik ist an der weitest entferntesten Position vom Übergabekanal der Luft an das Gebäude in das Geländer eingebaut. Dadurch können Lüftergeräusche im Gebäudeinneren sehr stark minimiert werden und die Absorberflächen werden optimal um- und / oder durchströmt.
- Durch die Installation von mehreren Lüftern kann das Luftvolumen bei Bedarf erhöht werden.
- Das Geländer ist für den Betrieb eines Absorbers für alle Lüftungsanforderungen geeignet, das heißt sowohl für unterschiedliche Gebäudetypen, Gebäudegrößen, Nutzungsformen, Winter- als auch Sommerbetrieb, sowie im Frühjahr und Herbst, am Tag und in der Nacht.
- Das Geländer ist variabel in der Höhe, Breite und Länge.

### Beschreibung

Die Figuren 1 bis 6 zeigen die vorliegende Erfindung ausgeführt als Balkongeländer.
Die Figuren 7a bis 7d und 8a bis 8d zeigen weitere Ausführungsformen, die an einer Terrasse, vor einem Fenster, vor einer Tür oder vor einem anderen Gebäudeteil oder als Trennwand montiert werden können.

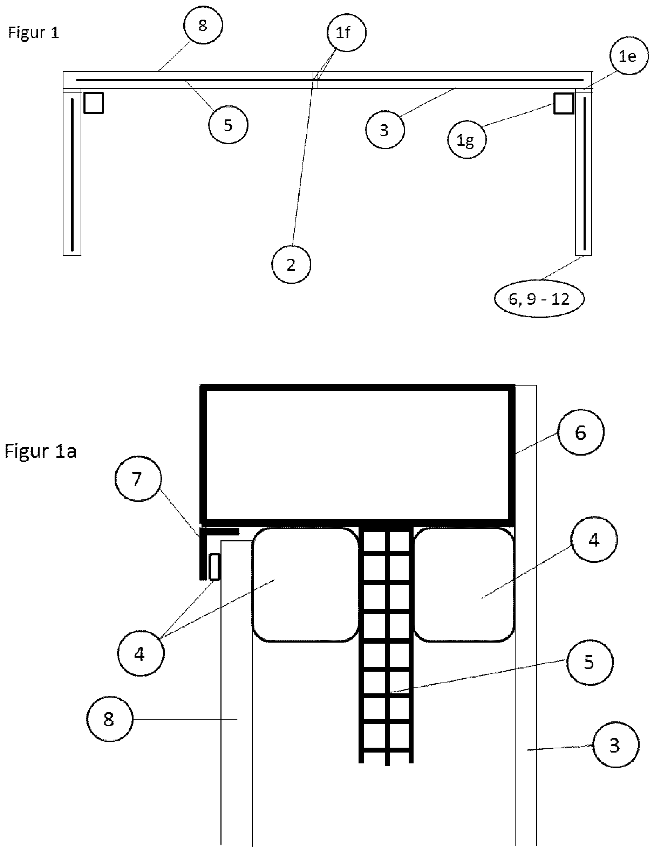

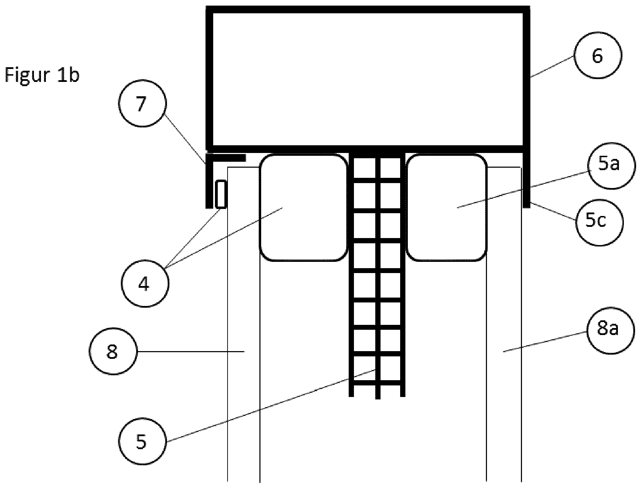

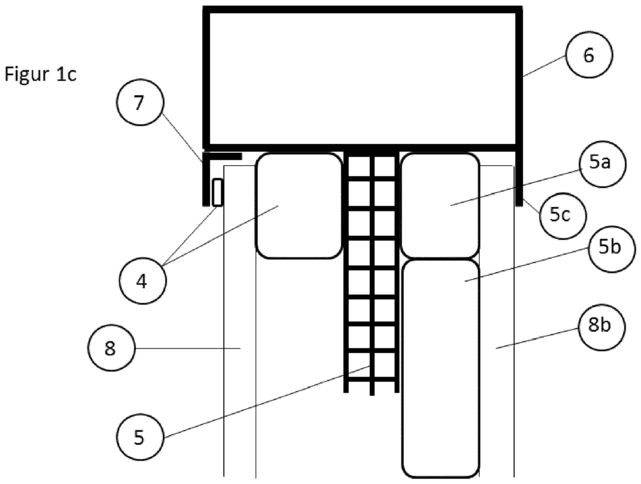

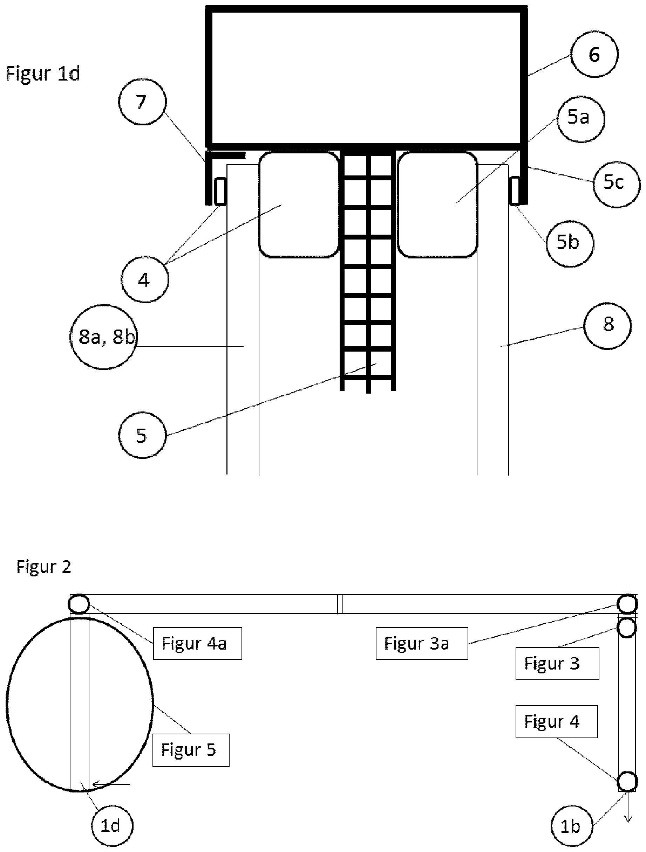

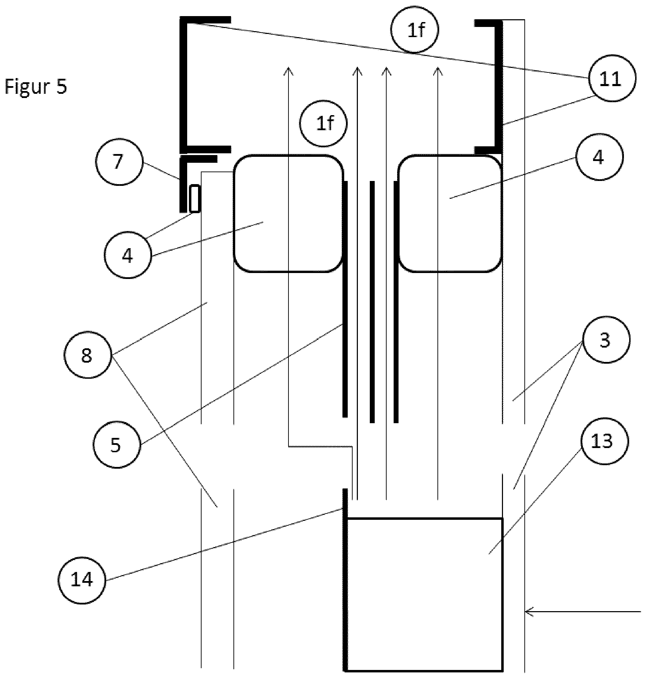

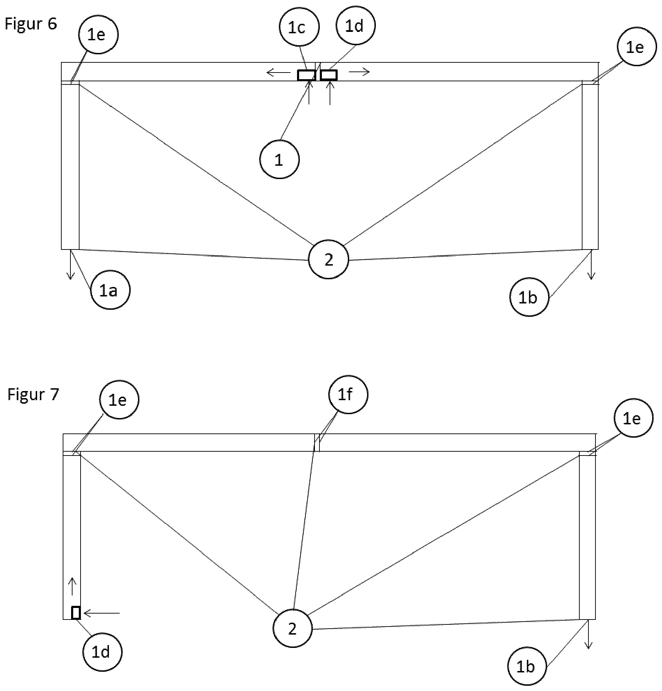

Alle dargestellten Ausführungsformen (Figuren 1 bis 8) können mehrere und andere Luftein- und Luftauslässe haben und mit mindestens einem lufttreibenden Gerät verbaut werden. Vorzugsweise wird ein oder mehrere strombetriebenen Lüfter als lufttreibendes Gerät in allen Ausführungsformen verwendet. Einige mögliche Positionen der Lüfter werden in der Figur 5 und in den Figuren 6 bis 8 dargestellt. Es können alternativ mehrere Positionen und weitere Positionen gleichzeitig mit Lüftern belegt werden. Auch eine Lüfterposition außerhalb der Geländerelemente ist in einer anderen Ausführungsform möglich. Alle Lüfter sind revisionsfähig verbaut und ein revisionsfähiger Filter oder ein revisionsfähiges Gitter ist, dem Luftstrom nach vorgelagert vor dem Lüfter und dem Geländer, montiert.

Im Geländerrahmenprofil oder unterhalb des Geländers ist eine Vorrichtung für ein Kabelreservat vom Lüfter zum Gebäude integriert, wenn nicht der oder die Lüfter außerhalb des Geländers installiert sind.

Es werden im Folgenden die Ausführungsbeispiele 1 bis 8 näher beschrieben.

**Figur 1****:** Blick von oben auf Geländer, hier als Balkon gezeigt.

Die Geländerhaltevorrichtungen wie zum Beispiel Balkonpfosten (1g) werden an die zum Gebäude weisende Halteplatte (3), an das zum Gebäude weisenden Geländerrahmenprofil (6, 9-12), oder an die zum Gebäude weisende semi-transluzenten Platte (8) montiert, wie in Figur 1c.

Die semi-transluzente Platte (8) ist vorzugsweise aus Glas, kann aber in anderen Ausführungsformen aus allen semi-transluzenten Materialien wie auch Kunststoffen, anderen Materialien oder eine Kombination von Glas und anderen Materialien gefertigt werden. Die semi-transluzente Platte kann auch aus verschiedenen Schichten von verschiedenen Materialien bestehen. Alle Platten, wie die semi-transluzente Platte (8), die Halteplatte (3) und die Absorberplatte (5) können jeweils für sich aus einer oder aus mehreren Platten bestehen oder neben einander angeordnet werden. Die semi-transluzente Platte wird vorzugsweise von einer abgewinkelten Glashalteleiste festgehalten, da diese in gängigen Strangpressprofilen einfach verbaut werden können. Alternativ können aber auch andere Formen von Glashalteleisten verwendet werden.

Die in allen Ausführungen verwendete Absorberplatte (5) ist vorzugsweise eine Mehrfachstegplatte mit horizontal insbesondere zur Balkonbodenplatte verlaufenden luftdurchströmten Hohlräumen. Diese Stege der luftdurchströmten Hohlräume können eine Vielzahl von Mehrfachestegen aufweisen. Diese Absorberplatte (5) kann in einer anderen Ausführungsform auch eine Vielzahl von anderen durchströmten oder nichtdurchströmten Formen und schichten aufweisen und kann auch eine einfache ebene Fläche aufweisen, die nicht luftdurchströmt ist, sondern nur luftumströmt ist. Im Falle einer luftdurchströmten Absorberplatte (5) ist es in einer anderen Ausführungsform auch möglich, dass sowohl der Zwischenraum zwischen der Glasplatte (8) und der Absorberplatte (5) und oder zwischen der Halteplatte (3) und der Absorberplatte (5) nicht luftdurchströmt ist.

Die Materialien der Absorberplatte (5) können alle Sonnenlicht absorbierenden dunklen Materialien aus allen Metallen, allen Kunststoffen, allen Gläsern, allen Hölzern bzw. allen künstlichen oder natürlichen Werkstoffen sein, oder eine Kombination aus diesen Materialien.

Das Geländerrahmenprofil (6, 9 bis 12) ist vorzugsweise ein extrudiertes Strangpressprofil aus Aluminium oder aller Art von Metallen oder Kunststoffen, aus aller Art von organischen Stoffen, anderen Stoffen, einem Stoff aus verschieden genannten Komponenten, oder es kann aus anderen Materialien sein. Das Rahmenprofil kann alternativ auch als Vollmaterial aus den genannten Materialien gebaut werden oder aus Einzelkomponenten verbaut werden. Es werden mindestens zwei waagerechten und mindestens zwei senkrechten Strangpressprofilen pro Geländer montiert.

Die senkrecht platzierten Strangpressprofile sind mit Bohrungen oder anderen Luftdurchlässen (1e, 1f) versehen, um einen ununterbrochenen Luftstrom zwischen den Geländerelementen zu gewährleisten. Umlaufend sind sie an der Verbindung zwischen den Geländerelementen mit einer Dichtung oder einer luft- und wasserdichten Schließfunktion (2) versehen, damit Luft nicht nach außen und Wasser nicht nach innen dringen kann.

Das Geländer kann in vielfältigen Ausführungsformen beschaffen sein. In derartigen Ausführungen können ein oder eine Vielzahl von Rahmenelementen nebeneinander verbaut werden. Dies ist abhängig von den gestalterischen und statischen Anforderungen des jeweiligen Balkons oder Gebäudes. Bei einem Geländer mit nur einem Rahmenelement müssen die senkrechten Rahmenprofile nicht notwendigerweise mit Luftdurchlässen (1e, 1f) und Dichtung oder eine luft- und wasserdichte Schließfunktion (2) verbaut werden. Die oberen und unteren Rahmenprofile, die semi-transluzente Platte (8), die Absorberplatte (5) und die Halteplatte (3) sind in einer derartigen Ausführungsform in einem Stück, ohne Unterbrechung, in einem Rahmenelement verbaut. Bei einem Geländer mit einer Vielzahl von Rahmenelementen werden alle senkrechten Rahmenprofile mit Luftdurchlässen (1e, 1f) und Dichtung oder eine luft- und wasserdichte Schließfunktionen (2) verbaut. Die oberen und unteren Rahmenprofile, die semi-transluzente Platte (8), die Absorberplatte (5) und die Halteplatte (3) sind in einer derartigen Ausführungsform in jedem Rahmenelement verbaut.

Auf der Innenseite des Geländers ist auf das Geländerrahmenprofil (6) eine Halteplatte (3) montiert. Diese Halteplatte hat statisch hohe und thermisch speichernden Eigenschaften und kann Wärme zwischen speichern. Die Halteplatte wird vorzugsweise aus blickdichten Materialien mit hohen statischen Eigenschaften hergestellt, außer in den Ausführungsformen die in den Figuren 1c und 1d beschrieben sind, in welchen eine Halteplatte aus Glas eingebaut ist. Die Halteplatte kann auf das Geländerrahmenprofil geklebt, geschraubt oder anderweitig montiert werden.

In einer anderen Ausführungsform sind alle Ecken der luftführenden Kammern, Stege, Strangpressprofile und andere luftführende Teile des Geländers strömungstechnisch von innen abgerundet gestaltet, um den Druckverlust der zu bewegenden Luft so gering wie möglich zu halten.

In einer anderen Ausführungsform können alle thermisch leitende Stege, Strangpressprofile und andere thermisch leitende Teile des Geländers thermotechnisch derart thermisch entkoppelt gestaltet werden, um den Wärmeverlust der zu bewegenden Luft bis zum Gebäude so gering wie möglich zu halten. Hierzu können in allen Bereichen, an denen Wärmebrücken entstehen können, Dämmmaterialien verbaut werden.

In einer anderen Ausführungsform können alle nicht notwendig luftdurchfluteten Bereiche des Geländers mit thermisch dämmenden Materialien gefüllt werden.

**Figur 1a****:** Blick von der Seite auf Geländer - mit oberem horizontal zur Balkonbodenplatte verlaufendem Geländerrahmenprofil (6).

Auf der Innenseite des Geländers ist auf das Geländerrahmenprofil (6) eine Halteplatte (3) montiert. In Richtung der Geländeraußenseite werden abstandsweise montierte oder anderweitig luftdurchströmt montierte Distanzhalter (4) geklebt, geschraubt oder anderweitig montiert. Dagegen ist eine Absorberplatte (5) montiert. Eine Glashalteleiste (7) wird von außen am Geländerrahmenprofil befestigt. Diese Glashalteleiste hält über einen Distanzhalter (4) die Glasplatte. Abstandsweise montierte oder anderweitig luftdurchströmt montierte Distanzhalter bilden zwischen der luftum- und / oder durchströmten Absorberplatte mit einer semi-transluzenten Glasplatte (8) auf der einen Seite und zwischen der luftum- und / oder durchströmten Absorberplatte und der Halteplatte auf der anderen Seite jeweils einen luftdurchströmten Freiraum.

Das untere horizontal zur Balkonbodenplatte verlaufende Geländerrahmenprofil (6) ist nach unten gespiegelt.

**Figur 1b****:** Blick von der Seite auf Geländer - mit oberem horizontal zur Balkonbodenplatte verlaufendem Geländerrahmenprofil (6).

Auf der Balkoninnenseite ist alternativ in dieser Ausführung auf der Innenseite des Geländerrahmenprofils (6) eine Halteplatte (8a) montiert. Am Geländerrahmeprofil auf der Geländerinnenseite ist eine Halteleiste (5c) angebracht. Alternativ kann diese Halteleiste auch durch eine Glashalteleiste (7) ersetzt werden.

In Richtung der Geländeraußenseite werden abstandsweise montierte oder anderweitig luftdurchströmt montierte Distanzhalter (4) geklebt, geschraubt oder anderweitig montiert. Dagegen ist eine Absorberplatte (5) montiert. Eine Glashalteleiste (7) wird von außen am Geländerrahmenprofil befestigt. Diese Glashalteleiste hält über einen Distanzhalter (4) die Glasplatte. Abstandsweise montierte oder anderweitig luftdurchströmt montierte Distanzhalter bilden zwischen der luftum- und / oder durchströmten Absorberplatte mit einer semi-transparenten Glasplatte (8) auf der einen Seite und zwischen der luftum- und / oder durchströmten Absorberplatte und der Halteplatte auf der anderen Seite jeweils einen luftdurchströmten Freiraum.

Das untere horizontal zur Balkonbodenplatte verlaufende Geländerrahmenprofil (6) ist nach unten gespiegelt.

**Figur 1c****:** Blick von der Seite auf Geländer - mit oberem horizontal zur Balkonbodenplatte verlaufendem Geländerrahmenprofil (6).

Auf der Innenseite des Geländers ist alternativ in dieser Ausführung auf der Innenseite des Geländerrahmenprofils (6) eine semi-transluzente Glasplatte (8b) montiert. Diese Glasplatte hat optisch nach innen die Wirkung, dass das ganze Balkongeländer eine reine semi-transluzent Geländerkonstruktion wäre. Die Ausführungsform ist gleich wie Figur 1b außer, dass die zum Gebäude weisende Halteplatte eine semi-transluzente Glasplatte (8b) ist. Am Geländerrahmeprofil auf der Geländerinnenseite ist eine Halteleiste (5c) angebracht. Alternativ kann diese Halteleiste auch durch eine Glashalteleiste (7) ersetzt werden.

Eine andere Ausführungsform hat zwischen dem Absorber (5) eine thermisch dämmende Schicht (5b), damit sich Personen bei starker solaren Strahlung an der Innenseite des Balkongeländers an der schneller aufheizbaren Glasplatte - im Vergleich zur Halteplatte - nicht verbrennen können. Dies kann durch die Anbringung einer Dämmplatte als Distanzhalter (5b) zwischen Absorber- und der Glasplatte auf der Innenseite erreicht werden. Die thermisch dämmende Schicht kann alternativ auch zusätzlich als Distanzhalter (5a) genützt werden.

In Richtung der Geländeraußenseite werden abstandsweise montierte oder anderweitig luftdurchströmte montierte Distanzhalter (4) geklebt, geschraubt oder anderweitig montiert. Dagegen ist eine Absorberplatte (5) montiert. Eine Glashalteleiste (7) wird von außen am Geländerrahmenprofil befestigt. Diese Glashalteleiste hält über einen Distanzhalter (4) die Glasplatte. Abstandsweise montierte oder anderweitig luftdurchströmt montierte Distanzhalter bilden zwischen der luftum- und / oder durchströmten Absorberplatte mit einer semi-transluzent Glasplatte (8) auf der einen Seite und zwischen der luftum- und / oder durchströmten Absorberplatte und der Halteplatte auf der anderen Seite jeweils einen luftdurchströmten Freiraum, wenn keine Dämmplatte (5b) eingebaut ist.

Das untere horizontal zur Balkonbodenplatte verlaufende Geländerrahmenprofil (6) ist nach unten gespiegelt.

**Figur 1d****:** Blick von der Seite auf Geländer - mit oberem horizontal zur Balkonbodenplatte verlaufendem Geländerrahmenprofil (6). Diese Ausführungsform, die Figur 1d zeigt, zeigt anders als in den Figuren 1a bis 1c dargestellt, die nicht zugängliche Geländeraußenseite rechts und die zugängliche Geländerinnenseite links. Die Glasplatte (8) ist somit die Seite des Geländers, die sichtbar ist, wenn man vor dem Gebäude stehend auf das Geländer sieht.

Auf der gebäudezugänglichen Seite des Geländers ist alternativ in dieser Ausführung auf der gebäudezugänglichen Seite des Geländerrahmenprofils (6) eine Glashalteleiste (5c) montiert. Dadurch ist das Geländer von der gebäudezugänglichen Seite zu öffnen.

An der dem Geländer zugänglichen Seite des Geländerrahmenprofils (6) ist eine Halteplatte (8a) oder eine zweite Glasplatte (8b) montiert. In Richtung der dem Geländer nicht zugänglichen Seite werden abstandsweise montierte oder anderweitig luftdurchströmt montierte Distanzhalter (4) geklebt, geschraubt oder anderweitig montiert. Dagegen ist eine Absorberplatte (5) montiert. Diese Ausführungsform hat am Geländerrahmeprofil auf der Geländer nicht zugänglichen Seite eine Halteleiste (5c). Alternativ kann diese Halteleiste (5c) auf der Geländer nicht zugänglichen Seite des Geländers auch durch eine zweite montierte Glashalteleiste gleich wie (7) ersetzt werden.

Diese Glashalteleiste hält über einen Distanzhalter (5b) die Glasplatte (8). Alternativ, abhängig von der Beschaffenheit der Halteleiste (5c) und der Glasplatte (8), kann der Distanzhalter (5b) auch weg gelassen werden. Abstandsweise montierte oder anderweitig luftdurchströmt montierte Distanzhalter bilden zwischen der luftum- und / oder durchströmten Absorberplatte mit semi-transluzenter Glasplatte (8) auf der einen Seite und zwischen der luftum- und / oder durchströmten Absorberplatte und der Halteplatte (8a) oder der Glasplatte (8b) auf der gebäudezugewandten Seite des Rahmens jeweils einen luftdurchströmten Freiraum.

Das untere horizontal zur Balkonbodenplatte verlaufende Geländerrahmenprofil (6) ist nach unten gespiegelt.

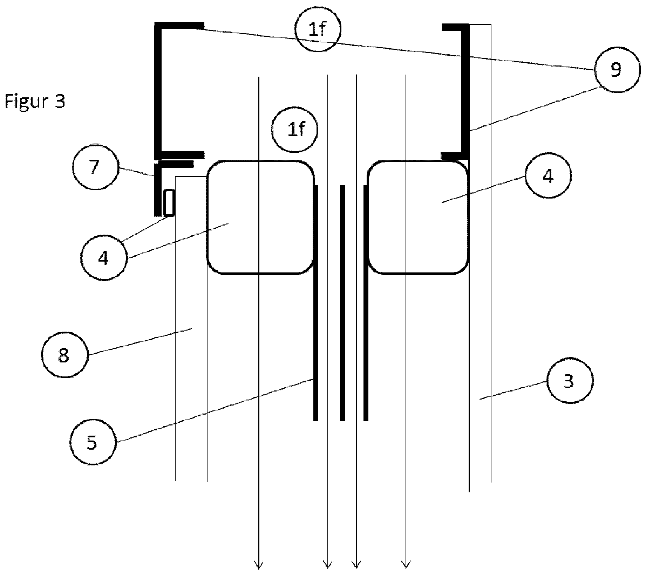

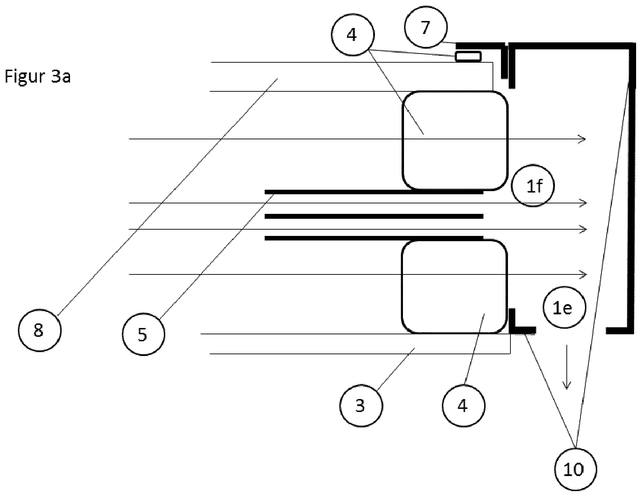

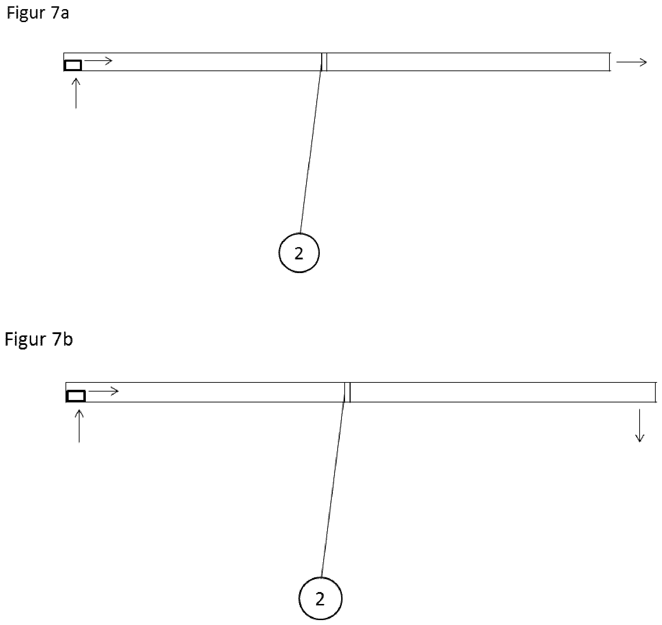

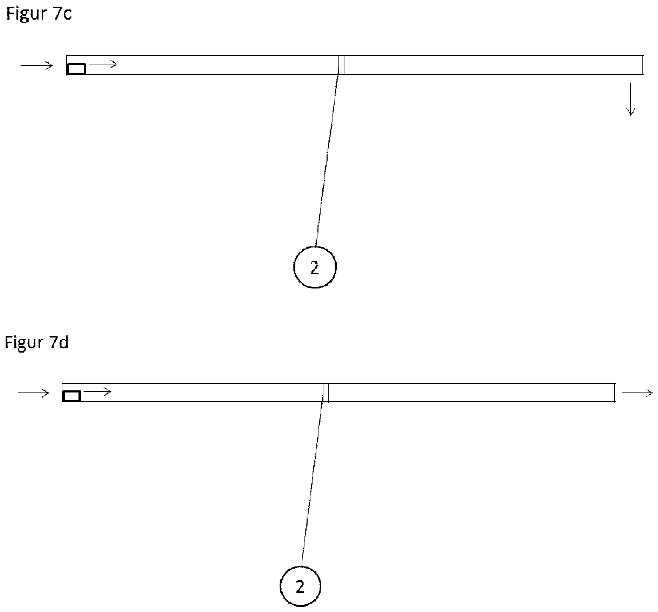

**Figur 2****:** Blick von oben auf Geländer- Figur 2 zeigt das Geländer wie in der Ausführungsform der Figur 7 mit rechtsseitiger Luftübergabe an das Gebäude (1b) und linksseitigem Lufteinlass (1d) mit mindestens einem Lüfter (1d) im Geländer. In den Figuren 3 bis 5 werden die Details beschrieben. Die Luftführung ist durch Pfeile dargestellt.

**Figur 3****:** Blick von oben auf Geländer - Senkrechtes Geländerrahmenprofil, das vom anschließenden Rahmenelement über die Seitenfläche der Profilseite längs der Balkonbodenplatte die Luft zur Mitte des Rahmenelements übergibt. Die Luftführung ist durch Pfeile dargestellt.

Die senkrechten Geländerahmenprofile (9) sind mit Luftdurchlässen (1f) versehen. Auf der Innenseite des Geländers ist auf das Geländerrahmenprofil eine Halteplatte (3) montiert. In Richtung der Geländeraußenseite werden abstandsweise oder luftdurchströmte Distanzhalter (4) montiert. Dagegen ist eine Absorberplatte (5) montiert. Abstandsweise montierte oder anderweitig luftdurchströmt montierte Distanzhalter bilden zwischen der luftum- und / oder durchströmten Absorberplatte mit einer semi-transparenten Glasplatte (8) auf der einen Seite und zwischen der luftum- und / oder durchströmten Absorberplatte und der Halteplatte (3) auf der anderen Seite jeweils einen luftdurchströmten Freiraum. Der luftdurchströmte Freiraum ist durch Pfeile dargestellt. Eine Glashalteleiste (7) wird von außen am Geländerrahmenprofil (9) befestigt. Diese Glashalteleiste hält über einen Distanzhalter (4) die Glasplatte (8).

**Figur 3a****:** Blick von oben auf Geländer - senkrechtes Geländerrahmenprofil, das vom anschließenden Rahmenelement über die im 90 Gradwinkel abgewinkelte Seitenfläche der Profilseite längs der Balkonbodenplatte die Luft zur Seite des Rahmenelements, nach unten im Figur 3a dargestellt, übergibt. Die Luftführung ist durch Pfeile dargestellt.

Die senkrechten Geländerrahmenprofile (10) sind mit Luftdurchlässen im Strangpressprofil zur Rahmenelementinnenseite (1f) und zur im 90 Gradwinkel anschließenden Rahmenelemente versehen (1e). Auf der Innenseite des Geländers ist auf das Geländerrahmenprofil eine Halteplatte (3) montiert. In Richtung der Geländeraußenseite werden abstandsweise oder luftdurchströmte Distanzhalter (4) montiert. Dagegen ist eine Absorberplatte (5) montiert. Abstandsweise oder luftdurchströmte montierte Distanzhalter (4) bilden mit einer semi-transluzenten Glasplatte (8) einen luftdurchströmten Freiraum zwischen der Glasplatte und der luftum- und / oder durchströmten Absorberplatte (5) und zur Halteplatte (3). Der luftdurchströmte Freiraum ist durch Pfeile dargestellt. Eine Glashalteleiste (7) wird von außen am Geländerrahmenprofil befestigt. Diese Glashalteleiste (7) hält über einen Distanzhalter (4) die Glasplatte (8).

Eine andere Ausführung weist folgende Merkmale auf. Ein senkrechtes Geländerrahmenprofil, das an das anschließende Rahmenelement über eine in einem anderen Winkel als 90 Grad abgewinkelte Seitenfläche der Profilseite längs der Balkonbodenplatte die Luft zur Seite des Rahmenelements nach an das nebenstehende Rahmenelement oder das Gebäude (1e), nach unten in Figur 3a dargestellt, übergibt. Die senkrechten Geländerrahmenprofile sind in dieser Ausführungsform mit Luftdurchlässen im Strangpressprofil zur Rahmenelementinnenseite (1f) und zum in einem anderen Winkel als 90 Grad anschließenden Rahmenelement versehen.

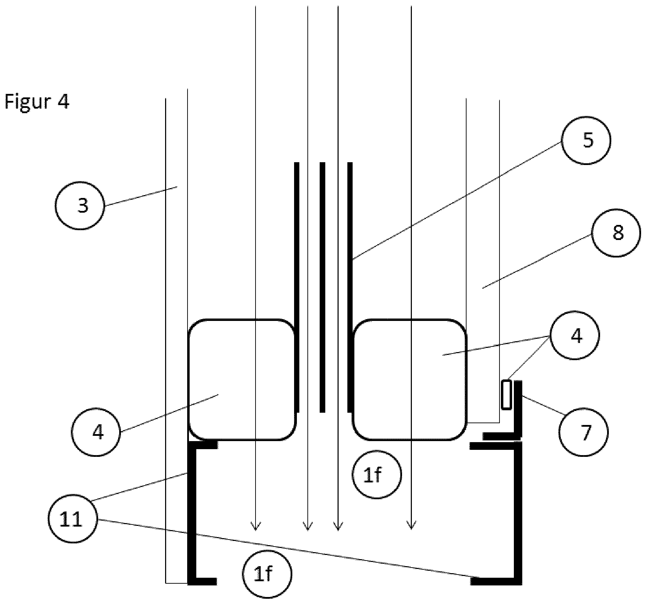

**Figur 4****:** Blick von oben auf Geländer - senkrechtes Geländerrahmenprofil, das zum anschließenden Rahmenelement über die Seitenfläche der Profilseite (1f) längs der Balkonbodenplatte die Luft zur Seite des anschließenden Rahmenelements oder an das Gebäude übergibt. Die Luftführung ist durch Pfeile dargestellt.

Die senkrechten Geländerrahmenprofile (11) sind mit Luftdurchlässen (1f) versehen. Auf der Innenseite des Geländers ist auf das Geländerrahmenprofil (11) eine Halteplatte (3) montiert. In Richtung der Geländeraußenseite werden abstandsweise oder luftdurchströmte Distanzhalter (4) montiert. Dagegen ist eine Absorberplatte (5) montiert. Abstandsweise oder luftdurchströmte montierte Distanzhalter (4) bilden mit einer semi-transluzenten Glasplatte (8) einen luftdurchströmten Freiraum zwischen der Glasplatte (8) und der luftum- und / oder durchströmten Absorberplatte (5) und zur Halteplatte (3). Der luftdurchströmte Freiraum ist durch Pfeile dargestellt. Eine Glashalteleiste (7) wird von außen am Geländerrahmenprofil befestigt. Diese Glashalteleiste hält über einen Distanzhalter (4) die Glasplatte (8).

**Figur 5****:** Blick von oben auf Geländer - Positionierung des Lüfters im Geländer und senkrechtes Geländerrahmenprofil, das zum anschließenden Geländerelement über die Seitenfläche der Profilseite die Luft übergibt (1f). Die Luftführung ist durch Pfeile dargestellt.

Die senkrechten Geländerrahmenprofile (11) sind mit Luftdurchlässen (1f) versehen. Auf der Innenseite des Geländers ist auf das Geländerrahmenprofil eine Halteplatte (3) montiert. In Richtung der Geländeraußenseite werden abstandsweise oder luftdurchströmte Distanzhalter (4) montiert. Dagegen ist eine Absorberplatte (5) montiert. Abstandsweise oder luftdurchströmte montierte Distanzhalter (4) bilden mit einer semi-transluzent Glasplatte (3) einen luftdurchströmten Freiraum zwischen Glasplatte (8) und luftum- und / oder durchströmten Absorberplatte (5) und zur Halteplatte (3). Der luftdurchströmte Freiraum ist durch Pfeile dargestellt. Eine Glashalteleiste (7) wird von außen am Geländerrahmenprofil (11) befestigt.

Diese Glashalteleiste (7) hält über einen Distanzhalter (4) die Glasplatte (8).

Der Lüfter (13) saugt in dieser Ausführungsform die Luft von der Innenseite des Geländers an und übergibt die Luft zur Mitte Geländerelements damit diese um die Absorberplatten (5) geführt wird. In Richtung der Geländerrahmenaußenseite ist der Lüfter mit einer weiteren Absorberplatte (14) verdeckt.

**Figur 6****:** Blick von oben auf Geländer - In dieser Ausführungsform wird das Geländer mit beidseitiger Luftübergabe an ein Gebäude (1a, 1b) und parallelem, zentralem Lufteinlass mit mindestens zwei Lüftern (1c, 1d) mittig im Geländer dargestellt. Die Luftführung ist durch Pfeile dargestellt.

Jeweils mindestens ein Lüfter (1c, 1d) ist von der Geländerinnenseite im Geländer zugänglich und revisionierbar montiert. Die Luft wird zu beiden Seiten um die Absorberplatten längs der Balkonbodenplatte im Geländer geführt.

An den Übergabepunkten zu dem jeweils anschließenden Geländerelement sind die gegenseitig anschließenden senkrechten Geländerrahmenprofile mit Durchlässen (1e) versehen, damit die Luft an das anschließende Geländerelement übergeben werden kann. Zwischen den Geländerelementen ist eine umlaufende Dichtung oder eine luft- und wasserdichte Schließfunktion (2) an den Außenkanten der sich berührenden Flächen der Geländerelemente angebracht, damit die Luft nicht nach außen zwischen den nebeneinander montierten Rahmenelementen entweichen kann.

In dieser Ausführungsform sind die senkrechten Rahmenprofile zwischen den beiden Lüfterpositionen optional ohne oder mit einer Dichtung oder einer luft- und wasserdichte Schließfunktion (1) an den Außenkanten der sich berührenden Flächen der Geländerelemente zur einfacheren Montage oder aus optischen Gründen zur gleichmäßigen Außenansicht montiert. Dies ist eine Dichtung oder eine luft- und wasserdichte Schließfunktion ohne Luftzirkulation (1). Diese beiden senkrechten Rahmenprofile sind dann nicht mit Luftdurchlässen versehen. In einer weiteren Ausführungsform können diese Rahmenprofile dennoch Öffnungen zum Luftaustausch haben.

An den zur Wand anschließenden Flächen des Geländers (1a, 1b) wird die Luft durch einen Durchlass am senkrecht an die Gebäudewand anschließenden Geländerrahmenprofil an eine Öffnung in der Gebäudewand (1a, 1b) übergeben. Dieser Übergang zur Gebäudewand ist durch eine umlaufende Dichtung oder eine luft- und wasserdichte Schließfunktion (2) an den Außenkanten der sich berührenden Flächen der Geländerelemente abgedichtet. In einer anderen Ausführung wird ein luftdichtes Verbindungsstück (1a, 1b) zwischen dem Geländerrahmenprofil und der Bohrung oder dem Wanddurchgang in der Gebäudewand eingesetzt.

**Figur 7****:** Blick von oben auf Geländer - In dieser Ausführungsform ist das Geländer mit rechtsseitiger Luftübergabe an das Gebäude und linksseitigem Lufteinlass mit mindestens einem Lüfter im Geländer dargestellt. Die Luftführung ist durch Pfeile dargestellt.

In dieser Ausführungsform ist der Lüfter (1d) an der zur Gebäudewand zeigenden Seite des linken Geländerelementes angebracht. Die Luft wird von der Innenseite des Geländers angesaugt und nach rechts um die Absorberplatten durch das gesamte Geländerelement geblasen.

An den Übergabepunkten zu dem anschließenden Geländerelement sind die gegenseitig anschließenden senkrechten Geländerrahmenprofile mit Durchlässen (1e, 1f) versehen damit die Luft an das weitere Geländerelement übergeben werden kann. Zwischen den Geländerelementen ist eine umlaufende Dichtung oder eine luft- und wasserdichte Schließfunktion (2) an den Außenkanten der sich berührenden Flächen der Geländerelemente montiert, damit die Luft nicht nach außen entweichen kann.

Rechts des Geländers wird die Luft durch einen Durchlass (1b) am senkrecht an die Gebäudewand anschließenden Rahmenprofil an eine Öffnung in der Gebäudewand (1b) übergeben. Dieser Übergang zur Gebäudewand ist durch eine umlaufende Dichtung oder eine luft- und wasserdichte Schließfunktion (2) an den Außenkanten der sich berührenden Flächen der Geländerelemente mit der Wand abgedichtet. In einer anderen Ausführung wird ein luftdichtes Verbindungsstück (1b) zwischen dem Geländerrahmenprofil und der Bohrung oder dem Wanddurchgang in der Gebäudewand eingesetzt.

Die **Figuren 7a bis 7d** zeigen alternative Ausführungsformen der Ausführung in Figur 7: Blick von oben auf Geländer - In diesen Ausführungsformen ist das Geländer jeweils mit rechtsseitiger Luftübergabe an das Gebäude und linksseitigem Lufteinlass mit mindestens einem Lüfter im Geländer dargestellt. Die Luftführung ist durch Pfeile dargestellt. In einer derartigen Ausführung mit zwei nebeneinander verbauten Geländerrahmenelementen werden die senkrechten Geländerrahmenprofile mit Luftdurchlässen und Dichtung oder eine luft- und wasserdichte Schließfunktionen (2) verbaut.

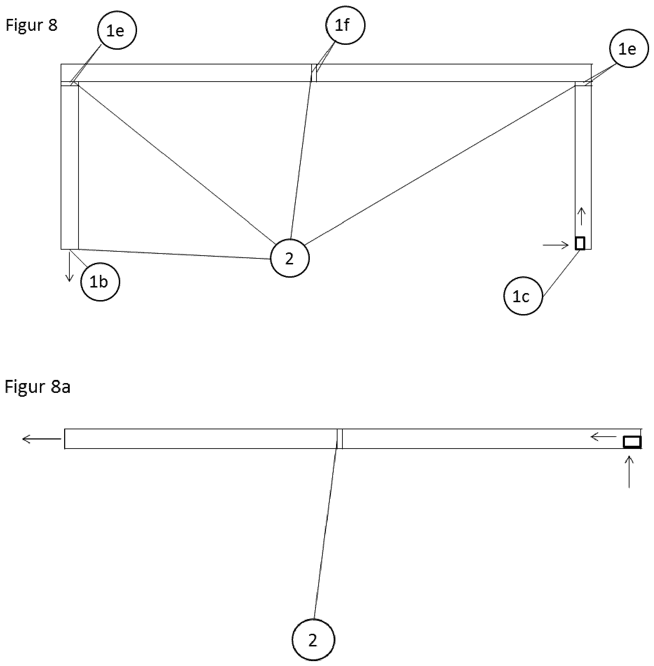

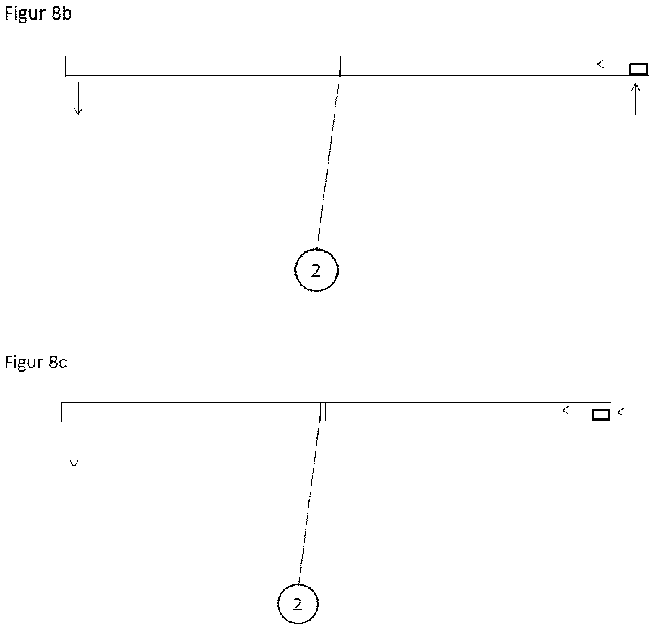

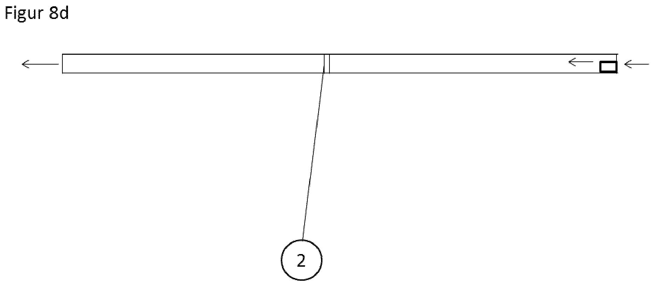

**Figur 8****:** Blick von oben auf Geländer - In dieser Ausführungsform ist das Balkongeländer mit linksseitiger Luftübergabe an das Gebäude und rechtsseitigem Lufteinlass mit mindestens einem Lüfter im Geländer dargestellt. Die Luftführung ist durch Pfeile dargestellt.

In dieser Ausführungsform ist der Lüfter (1c) an der zur Gebäudewand zeigenden Seite des rechten Geländerelementes angebracht. Die Luft wird von der Innenseite des Geländers angesaugt und nach rechts um die Absorberplatten durch das gesamte Geländerelement geblasen.

An den Übergabepunkten zu einem anschließenden Geländerelement sind die gegenseitig anschließenden senkrechten Geländerrahmenprofile mit Durchlässen (1e, 1f) versehen damit die Luft an das weitere Geländerelement übergeben werden kann. Zwischen den Geländerelementen ist eine umlaufende Dichtung oder eine luft- und wasserdichte Schließfunktion (2) an den Außenkanten der sich berührenden Flächen der Geländerelemente montiert, damit die Luft nicht nach außen entweichen kann.

Links des Geländers wird die Luft durch einen Durchlass (1 b) am senkrecht an die Gebäudewand anschließenden Geländerrahmenprofil an eine Öffnung in der Gebäudewand (1 b) übergeben. Dieser Übergang zur Gebäudewand ist durch eine umlaufende Dichtung oder eine luft- und wasserdichte Schließfunktion (2) an den Außenkanten der sich berührenden Flächen der Geländerrelemente mit der Wand abgedichtet. In einer anderen Ausführung wird ein luftdichtes Verbindungsstück (1b) zwischen dem Geländerrahmenprofil und der Bohrung oder dem Wanddurchgang in der Gebäudewand eingesetzt.

Die **Figuren 8a bis 8d** zeigen alternative Ausführungsformen der Ausführung in Figur 8: Blick von oben auf Geländer - In diesen Ausführungsformen ist das Geländer jeweils mit linksseitiger Luftübergabe an das Gebäude und rechtsseitigem Lufteinlass mit mindestens einem Lüfter im Geländer dargestellt. Die Luftführung ist durch Pfeile dargestellt. In einer derartigen Ausführung mit zwei nebeneinander verbauten Geländerelementen werden die senkrechten Geländerrahmenprofile mit Luftdurchlässen und Dichtung oder eine luft- und wasserdichte Schließfunktionen (2) verbaut.

## Patentansprüche

1. Geländer aus zwei oder mehreren Platten (3,8), das an einem Gebäude angebracht werden soll, wobei die Platten (3,8) mit einem Abstand zu einander positioniert sind, damit ein Hohlraum gebildet wird, wobei in dem gebildeten Hohlraum ein Luftstrom durch das Geländer fließen kann, und in welchem eine oder mehrere Absorberplatten (5), die luftum- und / oder luftdurchströmt werden, Platz haben, **dadurch gekennzeichnet, dass** mindestens die Platte (8), die sichtbar ist, wenn man vor dem Gebäude stehend auf das Geländer sieht, semi-transluzent ist, dass die Platten zwischen mindestens zwei waagerechten und zwei senkrechten Rahmenprofilen (6,9-12) positioniert sind, dass einige der senkrechten angeordneten Rahmenprofile (9,10,11) Öffnungen (1f) aufweisen, die einen Luftstrom durch das Geländer ermöglichen, dass lufttreibende Geräte (1c, 1d) so positionierbar sind, dass sie einen Luftstrom ermöglichen, dessen Richtung einen höheren horizontalen Anteil als vertikalen Anteil hat, und dass die äußeren Platten (3,8) und / oder die Rahmenprofile (6,9-12) mindestens zwei Löcher (1f,1e) aufweisen, durch welche Luft in den und aus dem sonst luftdichten Hohlraum geführt wird, wobei das Luftauslassloch mindestens mit einem Loch durch die Gebäudewand in das Gebäude luftdicht verbindbar ist.

2. Geländer nach Anspruch 1, **dadurch gekennzeichnet, dass**
- ein oder mehrere lufttreibende Geräte (1c,1d) im Geländer positioniert sein können.

3. Geländer nach einem der vorherigen Ansprüche, **dadurch gekennzeichnet, dass**
- ein oder mehrere lufttreibende Geräte (1c,1d) in der Gebäudewand oder außerhalb des Geländers integriert sein können.

4. Geländer nach einem der vorherigen Ansprüche, **dadurch gekennzeichnet, dass**
- eine Vorrichtung für ein Kabelreservat zwischen dem lufttreibenden Gerät (1 c,1 d) und dem Gebäude integriert ist.

5. Geländer nach einem der vorherigen Ansprüche, **dadurch gekennzeichnet, dass**
- der oder die lufttreibenden Geräte (1c,1d) am entferntesten Punkt vom Loch der Luftübergabe (1a,18) vom Geländer ins Gebäude sitzen können.

6. Geländer nach einem der vorherigen Ansprüche, **dadurch gekennzeichnet, dass**
- die Stabilität auch bei Montage an verschiedenen Haltevorrichtungen gewährleistet ist.

7. Geländer nach einem der vorherigen Ansprüche, **dadurch gekennzeichnet, dass**
- die jeweiligen Platten (3,8) und alle weiteren eingebauten Teile zwischen den Rahmenprofilen (6,9-12), nach Installation wieder heraus genommen werden können.

8. Geländer nach einem der vorherigen Ansprüche, **dadurch gekennzeichnet, dass**
- mehrere Geländer ohne, dass Luft entweichen kann, am senkrechten Rahmenprofil (9,10,11) verbunden werden können.

9. Geländer nach einem der vorherigen Ansprüche, **dadurch gekennzeichnet, dass**
- das Geländer in unterschiedlicher Breite, Höhe und Länge gefertigt werden kann.

## Claims

1. A railing for attachment to a building, the railing made of two or more plates (3, 8), wherein the plates (3, 8) are positioned with a distance one from the other in order to form a cavity, wherein a stream of air can flow within the formed cavity through the railing, and in which cavity there is room for one or more absorber plates (5) around and/or through which the air stream passes, **characterised in that** at least the plate (8) that is visible when looking at the railing from in front of the building, is semi-translucent, that the plates are positioned between at least two horizontal and two vertical frame profiles (6, 9 - 12), that some of the vertically arranged frame profiles (9, 10, 11) have openings (1f) that enable a stream of air through the railing, that air-driving devices (1c, 1d) can be positioned to enable a stream of air, the direction of which has a higher horizontal portion than vertical portion, and that the outer plates (3, 8) and/or the frame profiles (6, 9 - 12) have at least two holes (If, 1e) through which air is guided into and out of the otherwise air-tight cavity, wherein the air outlet hole is connectable in an air-tight manner at least to one hole through the building wall into the building.

2. The railing according to claim 1, **characterised in that**
- one or more air-driving devices (1c, 1d) may be positioned in the railing.

3. The railing according to any one of the preceding claims, **characterised in that**
- one or more air-driving devices (1c, 1d) may be incorporated into the building wall or outside of the railing.

4. The railing according to any one of the preceding claims, **characterised in that**
- a setup device for a cable reservation is incorporated between the air-driving device (1c, 1d) and the building.

5. The railing according to any one of the preceding claims, **characterised in that**
- the air-driving device(s) (1c, 1d) may be situated on the point farthest from the hole of air transfer (1a, 18) from the railing to the building.

6. The railing according to any one of the preceding claims, **characterised in that**
- the stability is guaranteed also in case of mounting to different holding devices.

7. The railing according to any one of the preceding claims, **characterised in that**
- the respective plates (3, 8) and all other installed parts between the frame profiles (6, 9 - 12) may be removed again after installation.

8. The railing according to any one of the preceding claims, **characterised in that**
- multiple railings may be connected on the vertical frame profile (9, 10, 11) without any leakage of air.

9. The railing according to any one of the preceding claims, **characterised in that**
- the railing may be manufactured with different widths, heights and lengths.

## Revendications

1. Garde-corps pour le montage à un bâtiment, le garde-corps consistant en deux ou plusieurs panneaux (3, 8), les panneaux (3, 8) étant positionnés avec une distance l'un de l'autre afin de former une cavité, où un courant d'air peut s'écouler dans la cavité formée à travers le garde-corps, et laquelle offre d'espace pour un ou plusieurs panneaux absorbeurs (5), autour et/ou à travers lesquels l'air peut s'écouler, **caractérisé en ce qu'**au moins le panneau (8) qui est visible en regardant le garde-corps d'un point à l'avant du bâtiment est demi-translucide, **en ce que** les panneaux sont positionnés entre respectivement au moins deux profilés de cadre (6, 9 - 12) horizontaux et verticaux, **en ce que** une partie des profilés de cadre (9, 10, 11) disposés verticalement présente des ouvertures (1f) qui permettent un courant d'air à travers le garde-corps, **en ce que** des dispositifs d'actionnement d'air (1c, 1d) peuvent être positionné de telle manière qu'ils permettent un courant d'air dont la direction présente une portion horizontale qui est supérieure à la portion verticale, et **en ce que** les panneaux (3, 8) extérieurs et / ou les profilés de cadre (6, 9 - 12) présentent au moins deux trous (1f, 1e) à travers lesquels l'air est passé dans et de la cavité autrement étanche à l'air, le trou de sortie d'air pouvant être relié de manière étanche à l'air au moins avec un trou dans la paroi du bâtiment et dans le bâtiment.

2. Garde-corps selon la revendication 1, **caractérisé en ce qu'**
- un ou plusieurs dispositifs d'actionnement d'air (1c, 1d) peuvent être positionnés dans le garde-corps.

3. Garde-corps selon l'une quelconque des revendications précédentes, **caractérisé en ce qu'**
- un ou plusieurs dispositifs d'actionnement d'air (1c, 1d) peuvent être incorporés dans la paroi du bâtiment ou au dehors du garde-corps.

4. Garde-corps selon l'une quelconque des revendications précédentes, **caractérisé en ce qu'**
- un arrangement pour un réservoir de câble est incorporé entre le dispositif d'actionnement d'air (1c, 1d) et le bâtiment.

5. Garde-corps selon l'une quelconque des revendications précédentes, **caractérisé en ce que**
- le ou les dispositif(s) d'actionnement d'air (1c, 1d) peut/peuvent être situé(s) au point le plus éloigné du trou de transfert d'air (1a, 18) du garde-corps au bâtiment.

6. Garde-corps selon l'une quelconque des revendications précédentes, **caractérisé en ce que**
- la stabilité est assurée même dans le cas du montage sur dispositifs de support différents.

7. Garde-corps selon l'une quelconque des revendications précédentes, **caractérisé en ce que**
- les panneaux (3, 8) respectifs et toutes les autres parties installées entre les profilés de cadre (6, 9 - 12) peuvent être enlevés après l'installation.

8. Garde-corps selon l'une quelconque des revendications précédentes, **caractérisé en ce que**
- plusieurs garde-corps peuvent être reliés sur le profilé de cadre vertical (9, 10, 11) sans que l'air puisse s'échapper.

9. Garde-corps selon l'une quelconque des revendications précédentes, **caractérisé en ce que**
- le garde-corps peut être fabriqué dans différentes largeurs, hauteurs et longueurs.
